# EUROPEAN PATENT APPLICATION

(11) **EP 2 039 976 A2**
(43) Date of publication of application: **25.03.2009**
(21) Application number: 08158777.6
(22) Date of filing: 23.06.2008
(51) Int. Cl.: F16L 41/02, F16L 41/03, F16L 41/18, F16L 27/02

(54) **Flexible fitting for rigid tubing assembly**

(30) Priority: 24.09.2007 US 860176
(71) Applicant: Honeywell International Inc., Morristown NJ 07960 (US)
(72) Inventor: Frost, Christopher, Scottsdale, AZ 85258 (US); Berti, Mary C., Tempe, AZ 85283 (US); Kocher, Richard D., Tempe, AZ 85282 (US)
(74) Representative: Buckley, Guy Julian

(57) **Abstract**

A flexible fitting (114) for connecting a plurality of rigid tubings (112) to form a tubing assembly including a housing (130), having a plurality of bores (132) defined therein and a plurality of tube fittings (122), each fixedly attached to an end portion of one of the plurality of rigid tubings (112) and disposed therein one of the plurality of bores (132). Each of the plurality of tube fittings (122) includes an o-ring channel (136) having an o-ring (128) disposed therein and in sealing contact with a sidewall of the housing (130) when the flexible fining is assembled. The combination of the tube fittings (122) and the o-rings (128) permit movement of tubing assembly, and more particularly the rigid tubing, about an axis of the tube fitting, translation along the axis of the tube fining, and provide angulation of the rigid tubing relative to the housing (130).

## Description

This invention was made with Government support under funding program G230JSF, bearing contract number N00019-02-3002, awarded by Lockheed Martin-US Government. The Government has certain rights in this invention.

### TECHNICAL FIELD

The present invention generally relates to a joint for rigid tubing and, more specifically, to a flexible fitting for rigid pneumatic ducting for apparatus such as gas turbine engines.

### BACKGROUND

Gas turbine ("jet") engines may be used to provide the thrust needed to propel aircraft. Various fluids necessary to operate gas turbine engines are typically routed through a conduit or plumbing system from one location to another. One type of fluid that may be ducted includes compressed air and oil mist produced by the engine that is ducted to the exhaust section of a turbine engine. Other applications may include redirecting a portion of the compressed air produced by the engine through a conduit or ducting system, the air can be used for a variety of other purposes such as, pressurizing, heating, and cooling the aircraft's cabin, deicing its wings and engine cowlings, and removing moisture from its front windows.

Due to variations in pressure, temperature, assembly, and other factors which influence an aircraft in flight and the stresses caused during takeoffs and landings, the ducting system can experience frequent and sudden changes in its position. To minimize any adverse effect of these changes on the ducting system, flexible fittings connecting rigid duct sections have been proposed and utilized. To be of use, the duct joints should not only permit rotational, translational, and angular movement between the rigid ducts, but they preferably do so with minimum leakage of the compressed air passing through the system. Consequently, such joints must not only permit rotational, translational, and angular movement, but they must also include a low leakage seal to minimize escape of the air.

Of particular interest are tubing assemblies that collect hot vented air, and/or oil mist, from two or more locations. More particularly, of concern are tubing assemblies that combine the vent flow from a first and second vent port or interface and route it to a single exhaust port, or third interface, such as the exhaust section of the turbine engine. Flexibility of the tubing assembly is preferred due to the three interfaces (two vent ports and one exhaust port) being distributed across the length and diameter of the engine. As the engine length and diameter change due to thermal growth, the three interface locations may move significantly with respect to one another. A rigid tubing assembly constructed of relatively small diameter tubes (.250" or smaller) may accommodate interface motion by using large bends and offsets which introduce sufficient flexibility. Relatively larger diameter rigid tubes are not as flexible and typically use an alternate provision to allow the tube to bend. High temperatures at the port interfaces and environment requirements of the engine bay may preclude the use of elastomeric hoses. Current design practice for tube assemblies that include at least three interfaces call for two expensive flexible sections of metal braided hose covered with a fireproof coating to be located somewhere between the end fittings and the tee of the rigid tube assembly.

With modern turbomachinery, both overall engine weight and size are issues of concern for engineers. Reduced engine size and lower weight goals have required smaller installation envelopes for the jet engine, including the ducting assemblies used thereupon.

Accordingly, there is a need for an improved flexible duct joint that permits rotational, translational, and angular movement between at least three interfaces of rigid duct sections and allows for simple assembly in an installation envelope of minimal size.

### BRIEF SUMMARY

There has now been developed a flexible fitting for a rigid tubing assembly comprising a housing having a plurality of bores defined therein. The housing configured to provide for a flow of a fluid therethrough and a plurality of tube fittings, each fixedly attached to an end portion of one of the plurality of rigid tubings and disposed within one of the plurality of bores. Each of the plurality of tube fittings, further including an o-ring channel and an o-ring disposed within each o-ring channel. Each of the o-rings in sealing contact with a sidewall of the housing to permit movement of each of the rigid tubings about an axis of the tube fitting, permit translation of each of the rigid tubings along the axis of the tube fitting, and provide angulation of each of the rigid tubings relative to the housing.

In yet another embodiment, by way of example only, there is provided a flexible fitting for a rigid tubing assembly comprising a housing having a plurality of bores defined therein. The housing configured to provide for a flow of a fluid therethrough. The flexible fitting further including a plurality of tube fittings each including an o-ring channel and fixedly attached to an end portion of one of the plurality of rigid tubings. Each of the plurality of tube fittings disposed within one of the plurality of bores and a plurality of o-rings, each disposed within an o-ring channel. Each of the o-rings in sealing contact with a sidewall of the housing to permit movement of each of the rigid tubings about an axis of an associated tube fitting, translation along the axis of an associated tube fitting, and provide angulation of the rigid tubing relative to the housing.

In a further embodiment, still by way of example only, there is provided a tubing assembly including a plurality of rigid tubings and a flexible fitting, the tubing assembly comprising: at least two rigid tubings; and a flexible fitting, positioned to fluidically connect the at least two rigid tubings. The flexible fitting comprising: a housing having a plurality of bores defined therein and configured to provide for a flow of a fluid therethrough. The flexible fitting further including a plurality of tube fittings each including an o-ring channel and fixedly attached to an end portion of each of the at least two rigid tubings. Each of the plurality of tube fittings disposed within one of the plurality of bores and a plurality of o-rings, each disposed within an o-ring channel. Each of the o-rings in sealing contact with a sidewall of the housing to permit movement of each of the at least two rigid tubings about an axis of an associated tube fitting, translation along the axis of an associated tube fitting, and provide angulation of each of the at least two rigid tubings relative to the housing.

Other independent features and advantages of the preferred apparatus and method will become apparent from the following detailed description, taken in conjunction with the accompanying drawings which illustrate, by way of example, the principles of the invention.

### BRIEF DESCRIPTION OF THE DRAWINGS

FIG. 1 is a perspective view of a turbomachine configured with a vent tube assembly including a flexible fitting for rigid tubing;

FIG. 2 is a perspective view of a vent tube assembly including a flexible fitting for a rigid tubing assembly;

FIG. 3 is a perspective view of the flexible fitting for the rigid tubing assembly of FIG. 2;

FIG. 4 is a partially cut-away perspective view of the flexible fitting for the rigid tubing assembly of FIG. 3; and

FIG. 5 is a sectional view of the flexible fitting for the rigid tubing assembly taken through line 5-5 of FIG. 3.

### DETAILED DESCRIPTION OF A PREFERRED EMBODIMENT

Before proceeding with a detailed description, it is to be appreciated that the described embodiment is not limited to use in conjunction with a particular type of airplane engine, or even to use in an airplane engine. Thus, although the present embodiment is, for convenience of explanation, depicted and described as being implemented in a turbine engine for an airplane, it will be appreciated that it may be implemented in various other types of systems and environments in which flexibility of a tubing assembly is required, such as, for example, gear pumps used in auxiliary power units and propulsion engine fuel control units.

Briefly, the present invention provides a low cost flexible fitting for a tubing assembly useful as, for example, a flexible fitting for aircraft engine ducting between two vent ports and an exhaust port. The flexible fitting of the present invention may be used to conjoin two or more portions of rigid tubing which make up a tubing assembly capable of carrying vented compressed air and oil mist of a turbomachine.

Unlike conventional styles of flexible fittings, such as ball joints, gimble joints and pressure compensated joints, the low cost flexible fitting of the present invention incorporates a low profile design that allows for rotational, translational and angular movement of at least two rigid ducts connected thereto. In addition, conventional flexible fittings typically lack the ability to provide axial load support. The flexible fitting of the present invention provides a low profile design, permitting installation in a variety of applications, even where the installation envelope is too small for conventional flexible fitting installation.

Regular maintenance of the turbomachine may require removal of the tubing assembly for access. Maintenance specifications may require that no special tools should be needed for the removal nor should adjustments need to be made when the assembly is removed and reinstalled. The low cost flexible fitting of the present invention provides not only a low profile design, that allows for rotational, translational and angular movement of at least two rigid ducts connected thereto while supporting axial load, but also allows for simple removal and reinstallation of the entire tube assembly, or the flexible fitting.

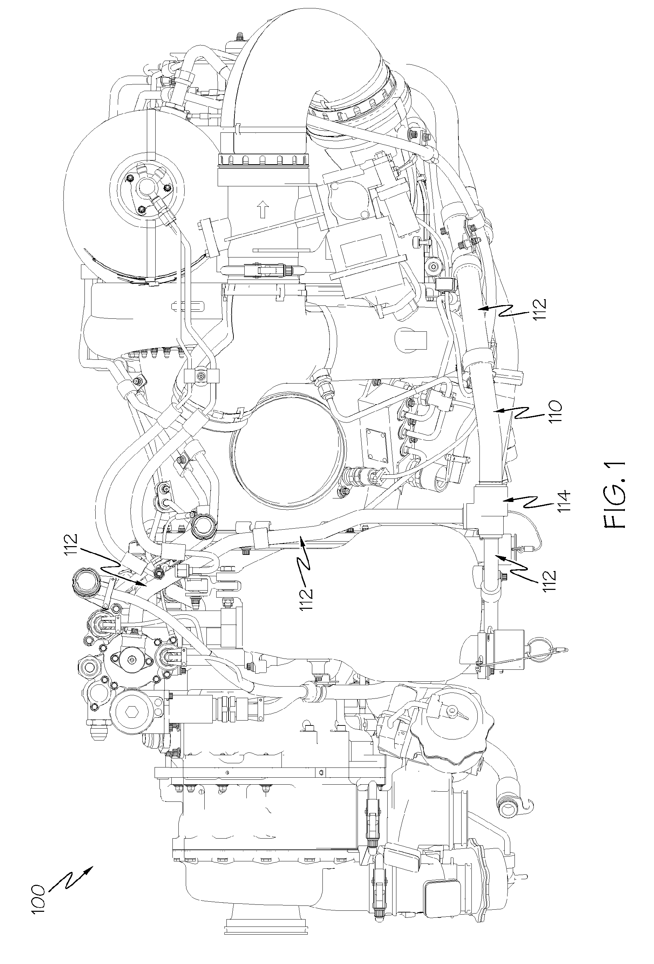

Referring to Figure 1, there is shown a perspective view of an exemplary turbomachine 100 having formed therein a tubing assembly 110. The tubing assembly 110 includes a plurality of rigid tube portions 112 that are conjoined using a low cost flexible fitting 114. More specifically, illustrated is a tubing assembly 110 that is configured to vent from two vent locations to a single end port. To this end, the low cost flexible fitting 114 includes three interfaces described presently. It should be understood that while the tubing assembly 110, and more particularly the flexible fitting 114, is described as connecting three rigid tubes, an embodiment in which any number of rigid tubes are connected via the flexible fitting 114 is anticipated by this disclosure. In addition, flexible fitting 114 provides for the connecting of any number of rigid tubes of varying sizes.

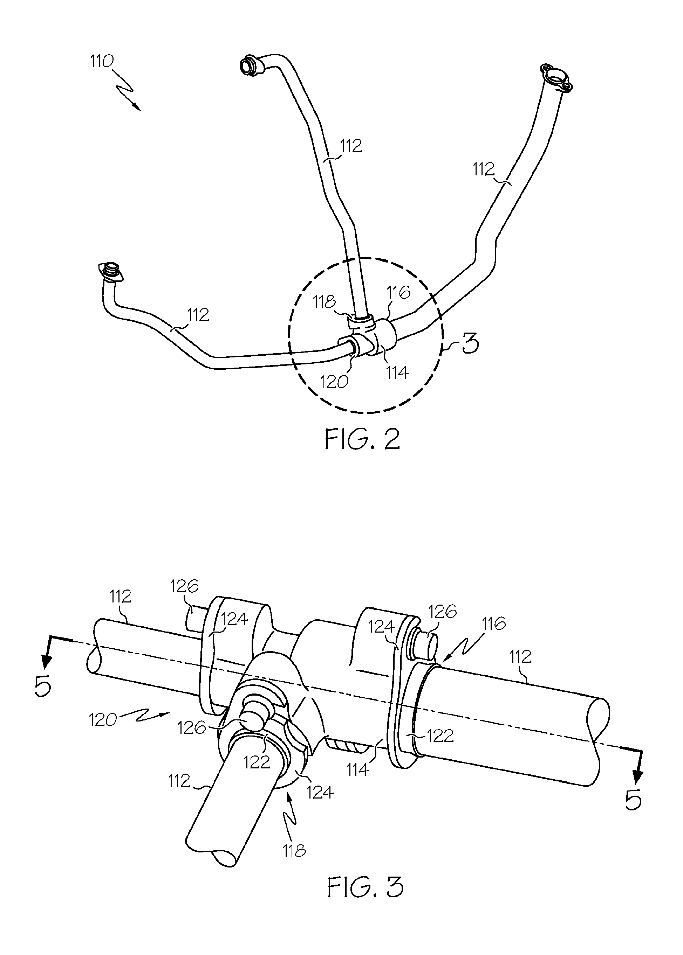

Referring now to FIG. 2, there is shown a perspective view of the tubing assembly 110 of FIG. 1, including the flexible fitting 114. Each of the rigid tube portions 112 is illustrated as connecting to the flexible fitting 114, forming three tube/flexible fitting interfaces 116, 118 and 120.

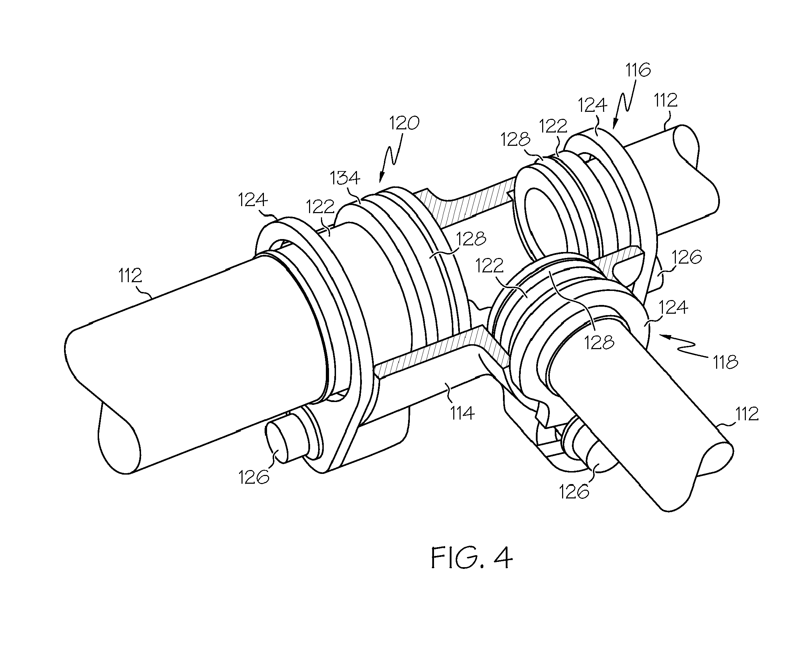

Referring to FIGs. 3 and 4, there is shown a perspective view and an orthogonal cut-away view, respectively, of a portion of the tubing assembly 110 designated in FIG. 2. The flexible fitting 114 is illustrated as connecting to the each of the rigid tube portions 112 at the interfaces 116, 118 and 120. The flexible fitting 114 may be made of any material suitable for withstanding the operating temperatures and pressures normally found in turbomachines. Such materials may include steel, aluminum, composites, nickel superalloys, such as the nickel-chromium-molybdenum alloy Inconel 625, and titanium.

The flexible fitting 114 includes a plurality of tube fittings 122 that are affixed, preferably by welding, onto an end portion of each of the rigid tube portions 112. A plurality of bolted stamped metal retainers 124 and bolts 126 aid in connecting the plurality of rigid tube portions 112 to the flexible fitting 114. As best seen in FIG. 4, a plurality of o-rings 128 positioned relative to the tube fittings 122 allows for rotational, translational, and angular movement of the rigid tube portions 112 within the flexible fitting 114.

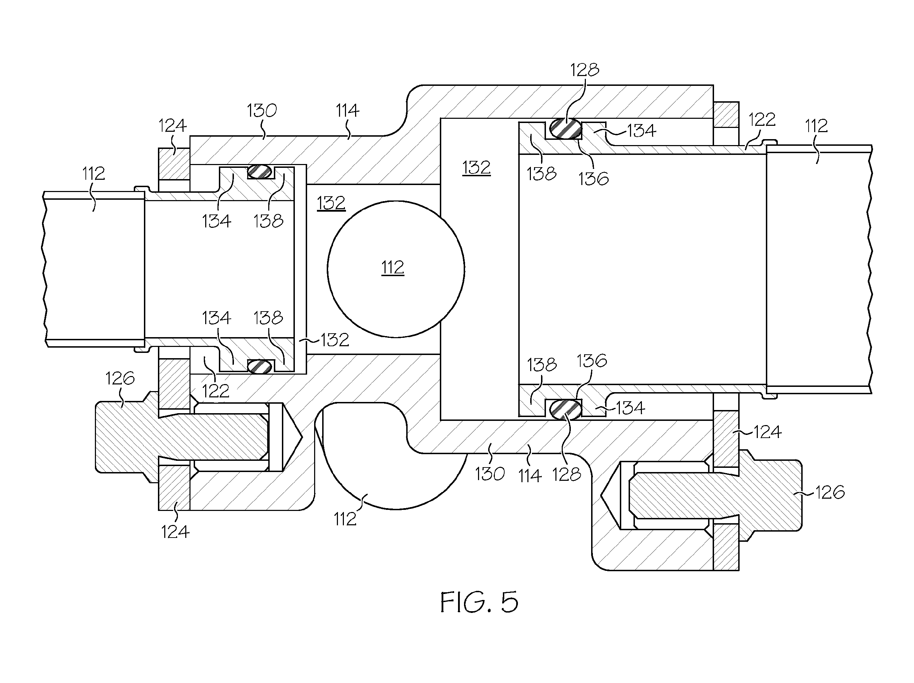

Referring now to FIG. 5, there is shown a close up cross-sectional view of the flexible fitting 114 of FIGs. 2-4, taken through line 5-5 of FIG. 3. The flexible fitting 114 includes an outer housing 130 having a bore 132 formed therein for the containment of the tube fittings 122. Each of the tube fittings 122 includes an annular flange 134, or shoulder portion, that in combination with the metal retainers 124, fixedly secures the tube fittings 122, and more particularly the rigid tube portions 112 within the bore 132.

Each of the tube fittings 122 may further include an o-ring channel 136 defined by the annular flanges 134 and a secondary annular flange 138 that provides for the seating of an o-ring 128 therein. The o-ring 128 provides a sealing fit with the housing 130 and allows for movement and rotating of each of the plurality of rigid tubes 112 about an axis of the tube fitting 122. In addition, the o-rings 128 provide translation of each of the rigid tube portions 112 relative to the axis of the corresponding tube fitting 122 and provide a small degree of angulation for each of the rigid tube portions 112 relative to the flexible fitting 114.

As previously alluded to, the flexible fitting 114 is described herein as being generally in the form of a t-joint. In an alternative embodiment, the flexible fitting 114 may be formed as a simple flexible union for tube assemblies with only two tubes, or it can join more than three tubes. In addition, a plurality of flexible fittings 114 may be used in a single tubing assembly to provide infinite tube intersections and configurations.

The flexible fitting 114 of the present invention may permit tubing assembly mismatch between the plurality of rigid tube portions 112 and/or the rigid tube portions 112 and the flexible fitting 114. In addition, the flexible fitting 114 may permit unrestrained thermal growth of the plurality of rigid tube portions 112, the housing 130, and/or the tube fitting 122 while supporting the axial loads that exist within the tubing assembly 110 when the rigid tube portions 112 are pressurized. The needed flexibility in flexible fitting 114 may be seen in the various locations that allow movement of the flexible fitting 114. For example, the o-rings 128 may allow for axial flexing and distance variations of the flexible fitting 114 relative to the rigid tube portions 112, and may allow for radial mismatch variations of the rigid tube portions 112. These parameters may permit minor assembly mismatch, thereby requiring less precision in the manufacture of the rigid tube portions 112. Moreover, the flexible fitting 114 of the present invention may also permit rotation of the rigid tube portions 112 relative to housing 130 of the flexible fitting 114, thereby allowing dimensional flexibility in this direction also.

The flexible fitting 114 described herein thus provides an improved means for providing rotation, translation and angulation about the axis of a rigid tubing connected thereto. The flexible fitting 114 utilizes a tube fitting 122 in combination with the o-rings 128 that provides for movement of each of the rigid tube portions 112 relative to the flexible fitting 114.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A flexible fitting (114) for connecting a plurality of rigid tubings (112) comprising:
a housing (130) having a plurality of bores (132) defined therein, the housing (130) configured to provide for a flow of a fluid therethrough; and
a plurality of tube fittings (122), each fixedly attached to an end portion of one of the plurality of rigid tubings (112) and disposed within one of the plurality of bores (132), each of the plurality of tube fittings (122), further including an o-ring channel (136); and
an o-ring (128) disposed within each o-ring channel (136), each of the o-rings (128) in sealing contact with a sidewall of the housing (130) to permit movement of each of the rigid tubings (112) about an axis of the tube fitting (122), permit translation of each of the rigid tubings (112) along the axis of the tube fitting (122), and provide angulation of each of the rigid tubings (112) relative to the housing (130).

2. The flexible fitting (114) according to claim 1, further including a plurality of metal retainers (124) to secure each of the plurality of tube fittings (122) within one of the plurality of bores (132).

3. The flexible fitting (114) according to claim 1, wherein the housing (130) is formed of one of a metal or a composite material.

4. The flexible fitting (114) according to claim 1, wherein the housing (130) is configured as a T and provides fluidic communication between three rigid tubings (112).

5. The flexible fitting (114) according to claim 1, wherein the tube fittings (122) are fixedly attached by welding.

6. A flexible fitting (114) for connecting a plurality of rigid tubings (112) in a tubing assembly (110) comprising:
a housing (130) having a plurality of bores (132) defined therein, the housing (130) configured to provide for a flow of a fluid therethrough;
a plurality of tube fittings (122) each including an o-ring channel (136) and fixedly attached to an end portion of one of the plurality of rigid tubings (112), each of the plurality of tube fittings (122) disposed within one of the plurality of bores (132); and
a plurality of o-rings (128), each disposed within an o-ring channel (136), each of the o-rings (128) in sealing contact with a sidewall of the housing (130) to permit movement of each of the rigid tubings (112) about an axis of an associated tube fitting (122), translation along the axis of an associated tube fitting (122), and provide angulation of the rigid tubing relative to the housing (130).

7. The flexible fitting (114) according to claim 6, further including a plurality of metal retainers (124) to secure each of the plurality of tube fittings (122) within a bore (132).

8. The flexible fitting (114) according to claim 6, wherein the housing (130) is configured as a T and provides fluidic communication between three rigid tubings (112).

9. The flexible fitting (114) according to claim 6, wherein the tube fittings (122) are fixedly attached by welding.

10. The according to claim 6, wherein the housing (130) has a length of less than about 2.5 inches.
